Europäisches Patentamt

European Patent Office

Office européen des brevets

(11) Veröffentlichungsnummer: **0 320 703 B1**

(12) **EUROPÄISCHE PATENTSCHRIFT**

(45) Veröffentlichungstag der Patentschrift: **04.08.93**

(21) Anmeldenummer: **88120061.2**

(22) Anmeldetag: **01.12.88**

(51) Int. Cl.⁵: **C07C 275/62**, C08G 18/78, C08G 18/80

(54) Verfahren zur Herstellung von Biuretpolyisocyanaten, die nach diesem Verfahren erhaltenen Verbindungen und ihre Verwendung.

(30) Priorität: **12.12.87 DE 3742181**

(43) Veröffentlichungstag der Anmeldung:
**21.06.89 Patentblatt 89/25**

(45) Bekanntmachung des Hinweises auf die
Patenterteilung:
**04.08.93 Patentblatt 93/31**

(84) Benannte Vertragsstaaten:
**AT BE CH DE ES FR GB IT LI NL SE**

(56) Entgegenhaltungen:
**EP-A- 0 150 769**
**US-A- 3 222 322**

(73) Patentinhaber: **BAYER AG**

**W-5090 Leverkusen 1 Bayerwerk(DE)**

(72) Erfinder: **Pedain, Josef, Dr.**
**Haferkamp 6**
**W-5000 Koeln 80(DE)**
Erfinder: **Schönfelder, Manfred, Dr.**
**Hoehenstrasse 126**
**W-5090 Leverkusen 3(DE)**
Erfinder: **Schmidt, Manfred, Dr.**
**Zeisigstrasse 5**
**W-4047 Dormagen(DE)**

**Beschreibung**

Die vorliegende Erfindung betrifft ein neues Verfahren zur Herstellung von Biuretpolyisocyanaten, die nach diesem Verfahren erhaltenen Verbindungen und ihre Verwendung als Polyisocyanatkomponente in Zweikomponenten-Polyurethanlacken.

Aliphatische Polyisocyanate, insbesondere Biuretpolyisocyanate auf Basis von 1,6-Diisocyanatohexan haben für die Herstellung lichtechter und extrem witterungsbeständiger Lacke mit höchster Glanzhaltung große technische Bedeutung erlangt. Sie werden in der Kombination mit Hydroxylgruppen aufweisenden Polyestern oder Polyacrylaten eingesetzt. Diese Zweikomponenten-Polyurethanlacke werden überwiegend zur Lackierung von wenig flexiblen Substraten wie Metall und Holz verwendet und zeichnen sich durch hohe Härte und sehr gute Haftung aus.

Die chemischen Grundlagen dieser Lacke und Überzüge werden u.a. in "Lackkunstharze" von Hans Wagner und Hans Friedrich Sarx, Carl Hanser Verlag, München 1971, Seite 153 bis 173 beschrieben.

Die Zweikomponentenpolyurethanlacke des Standes der Technik führen jedoch oft zu hochvernetzten Lacküberzügen, deren Elastizität den diesbezüglichen Anforderungen an Überzüge für flexible Substrate oft nicht genügt. Besonders im Automobilbau werden in zunehmendem Umfang flexible Kunststoffteile zur Erhöhung der Sicherheit eingesetzt. Diese flexiblen Formteile (Stoßstangen, Spoiler, Gehäuse für Außenspiegel u.dgl.) sind relativ groß und bestimmen daher wesentlich das äußere Aussehen des Fahrzeugs. Aus diesem Grund ist eine Lackierung der rohen Teile erforderlich. Es kommt hinzu, daß die Oberflächen der Kunststoffe bei Bewitterung abgebaut werden und daher gegen Witterungseinflüsse geschützt werden müssen. Elastische Lackierungen sind jedoch auch für weniger elastische Kunststoffteile erforderlich, um mechanische Schädigung der Teile zu verhindern. So müssen beispielsweise harte aber zähe Thermoplaste mit hochelastischen, äußerst beständigen Lacken lackiert werden, um zu verhindern, daß der Lackfilm bei mechanischer Beschädigung oder durch andere äußere Einflüsse reißt und die Risse sich in dem kompakten Kunststoff fortsetzen. An die Lackierung, vor allem an die Decklackierung, solcher Teile werden daher weit über das Maß einer üblichen Lackierung hinausgehende Ansprüche gestellt.

Eine Teillösung dieser Probleme war die Entwicklung von Hydroxylpolyethern und -polyacrylaten, die aufgrund ihres Aufbaus zu elastischen Lackfilmen verarbeitet werden können. Dadurch konnten allerdings nicht alle Schwierigkeiten behoben werden: Die Lackfilme die entstehen, sind oft nicht ausreichend hart und nicht genügend vernetzt und/oder zu wenig chemikalienbeständig.

Es war daher die der Erfindung zugrundeliegende Aufgabe, neue Polyisocyanate zur Verfügung zu stellen, welche in der Kombination mit Polyolen gemäß Stand der Technik Zweikomponenten-Polyurethanlacke ergeben, die den genannten besonderen Anforderungen genügen und insbesondere für die Lackierung von elastischen Kunststoffteilen optimal geeignet sind.

Diese Aufgabe konnte durch die Bereitstellung des nachstehend näher beschriebenen erfindungsgemäßen Verfahrens zur Herstellung von Urethan-modifizierten Biuretpolyisocyanaten gelöst werden.

Gegenstand der Erfindung ist ein Verfahren zur Herstellung von Urethan-modifizierten Biuretpolyisocyanaten durch Umsetzung von

a) 1,6-Diisocyanatohexan

mit unterschüssigen Mengen an

b) Biuretisierungsmitteln, bestehend aus Wasser und/oder organischen, mit Isocyanatgruppen unter Biuretbildung reagierenden Verbindungen,

unter Biuretbildung und anschließende Entfernung des nicht umgesetzten, überschüssigen 1,6-Diisocyanatohexans und von gegebenenfalls vorliegenden weiteren flüchtigen Bestandteilen, dadurch gekennzeichnet, daß man dem Reaktionsgemisch zu einem beliebigen Zeitpunkt vor der Entfernung des überschüssigen 1,6-Diisocyanatohexans

c) mindestens ein Estergruppen aufweisendes Diol mit einem mittleren Molekulargewicht von 350 bis 950 in einer Menge von 1 bis 50 Gew.-%, bezogen auf das Gewicht des als Ausgangsmaterial eingesetzten 1, 6-Diisocyanatohexans, hinzufügt und mit einem Teil der vorliegenden Isocyanatgruppen unter Urethanbildung abreagieren läßt,

mit der Maßgabe, daß im Falle der Verwendung von (cyclo)aliphatischen Diaminen als Biuretisierungsmittel und der Anwendung von oberhalb 250°C liegenden Temperaturen während der Biuretisierungsreaktion das Molekulargewicht der Polyesterdiole oberhalb 500 liegt, und wobei bei allen Varianten des Verfahrens die Art und Mengenverhältnisse der Reaktionspartner so gewählt werden, daß (i) in dem Reaktionsgemisch ohne Einbeziehung von gegebenenfalls mitverwendetem inertem Lösungsmittel nach beendeter Umsetzung noch mindestens 10 Gew.-% an freiem 1,6-Diisocyanatohexan vorliegen und (ii) das Molverhältnis von Biuretgruppen zu Urethangruppen in den Verfahrensprodukten bei 20:1 bis 0,2:1 liegt.

Gegenstand der Erfindung sind auch die nach diesem Verfahren erhaltenen, Urethan-modifizierten Biuretpolyisocyanate.

Gegenstand der Erfindung ist auch die Verwendung der nach diesem Verfahren erhaltenen, Urethan-modifizierten Biuretpolyisocyanate als Polyisocyanatkomponente in Zweikomponenten-Polyurethanlacken.

Die Herstellung von Biuretpolyisocyanaten, d.h. die Umsetzung von Diisocyanaten wie insbesondere 1,6-Diisocyanatohexan mit Biuretisierungsmitteln ist aus zahlreichen Vorveröffentlichungen bekannt. Beispielsweise sind folgende Verfahren in der Literatur beschrieben:

- Synthese aus Diisocyanaten und Wasser, gegebenenfalls in Gegenwart von Katalysatoren; siehe DE-PS 1 110 394, DE-OS 1 668 377, DE-OS 2 308 015, GB-PS 889 050, GB-PS 1 399 228, DD-PS 140 744.
- Synthese aus Diisocyanaten und Wasser in Gegenwart eines Lösungsmittels bzw. eines Lösungsmittelgemisches, siehe DE-OS 2 808 801, DE-OS 3 030 655.
- Synthese aus Diisocyanaten und Wasser, wobei das Wasser dampfförmig zur Reaktion gebracht wird, siehe DE-OS 2 918 739.
- Synthese aus Diisocyanaten und Aminen, siehe DE-PS 1 165 580, DE-PS 1 174 759, DE-OS 1 568 017, DE-OS 1 963 190, DE-OS 2 010 887, DE-OS 2 261 065, DE-AS 2 438 258, US-P 3 824 266, DE-AS 2 609 995, DE-OS 2 803 103, DE-PS 883 504, GB-PS 1 263 609, siehe auch Angew. Chem. 72, S. 1002.
- Synthese aus Diisocyanaten und Amin/Alkohol-Gemischen, siehe DE-OS 2 654 745.
- Synthese aus Diisocyanaten und ω,ω'-Diaminopolyethern, siehe DE-OS 1 570 632, DE-AS 1 215 365.
- Synthese aus Diisocyanaten und substituierten Harnstoffen, siehe DE-PS 1 101 394, DE-AS 1 227 004.
- Synthese aus Diisocyanaten und tertiären Alkoholen, gegebenenfalls in Anwesenheit von Katalysatoren, siehe DE-AS 1 543 178, DE-AS 1 931 055, DE-OS 2 308 015.
- Synthese aus Diisocyanaten und Ameisensäure, siehe DE-PS 1 174 760, DE-OS 2 308 015, DE-OS 2 437 130.
- Synthese aus Diisocyanaten und Aldoximen, siehe DE-OS 3 007 679.
- Synthese aus Diisocyanaten und trisubstituierten Essigsäuren und/oder Anhydriden, sowie gegebenenfalls Wasser, siehe DE-OS 34 03 277 bzw. 34 03 278.
- Synthese aus Diisocyanaten und Diaminen unter Verwendung von speziellen Glattstrahldüsen zur Herstellung des Reaktionsgemischs siehe EP-A-3505.
- Verwendung von 1,6-Diisocyanatohexan in Kombination mit (cyclo)aliphatischen Diaminen, gegebenenfalls unter Mitverwendung von niedermolekularen Polyhydroxylverbindungen eines unter 500 liegenden Molekulargewichts bei oberhalb 250 °C liegenden Reaktionstemperaturen siehe ältere deutsche Patentanmeldung P 37 00 209.0.

Das erfindungsgemäße Verfahren kann im Prinzip in weitgehender Analogie zu den Verfahren dieser Vorveröffentlichungen durchgeführt werden, wobei erfindungsgemäß lediglich neben dem Ausgangsdiisocyanat a) (1,6-Diisocyanatohexan) und den Biuretisierungsmitteln b) der auch in den genannten Vorveröffentlichungen verwendeten Art spezielle Polyesterdiole c) mitverwendet werden.

Beim erfindungsgemäßen Verfahren können somit alle beliebigen Biuretisierungsmittel b) des beispielhaft genannten Standes der Technik eingesetzt werden. Bevorzugte Biuretisierungsmittel sind 1,6-Diaminohexan, t-Butanol und besonders bevorzugt die Biuretisierungsmittel der DE-OS 34 03 277 bzw. 34 03 278, d.h. b1) 2,2,2-trisubstituierte Essigsäuren, insbesondere Trimethylessigsäure, b2) deren Abmischungen mit Wasser in einem Molverhältnis von trisubstituierter Essigsäure zu Wasser von bis zu 1:2,5 oder b3) Wasser in Abmischung mit 2,2,2-trisubstituierten Essigsäuren, insbesondere Trimethylessigsäure und/oder mit Anhydriden solcher Säuren, wobei pro Mol Wasser bis zu 0,39 Mol Säure und/oder bis zu 2 Mol Anhydrid eingesetzt werden, mit der Maßgabe, daß die Gesamtmenge der Säuren und des Anhydrids pro Mol Wasser mindestens 0,02 und höchstens 2 Mol beträgt.

Die beim erfindungsgemäßen Verfahren mitzuverwendenden Polyesterdiole c) weisen ein mittleres, aus der Hydroxylzahl berechenbares Molekulargewicht von 350 bis 950, vorzugsweise 500 bis 800 auf. Es handelt sich um an sich bekannte Polyesterdiole, die aus Diolen und Dicarbonsäuren aufgebaut sind. Geeignete Diole zur Herstellung der Polyesterdiole sind beispielsweise Dimethylolcyclohexan, Ethandiol, 1,2- und 1,3-Propandiol, 1,2-, 1,3- und 1,4-Butandiol und besonders bevorzugt 1,6-Hexandiol. Geeignete Dicarbonsäuren sind beispielsweise aromatische Dicarbonsäuren wie Phthalsäure, Isophthalsäure und Terephthalsäure, cycloaliphatische Dicarbonsäuren wie Hexahydrophthalsäure, Tetrahydrophthalsäure, Endomethylentetrahydrophthalsäure bzw. deren Anhydride und aliphatische Dicarbonsäuren, die bevorzugt Verwendung finden, wie Bernsteinsäure, Glutarsäure, Adipinsäure, Korksäure, Azelainsäure und Sebacinsäure oder deren Anhydride.

Beliebige Gemische derartiger Polyesterdiole können ebenfalls eingesetzt werden.

Besonders bevorzugt werden jedoch Polyesterdiole aus $\epsilon$-Caprolacton des genannten Molekulargewichtsbereichs eingesetzt, die in an sich bekannter Weise aus einem Diol der oben beispielhaft genannten Art als Startermolekül und $\epsilon$-Caprolacton hergestellt worden sind. Hier wird vorzugsweise als Startermolekül 1,6-Hexandiol verwendet.

Ganz besonders bevorzugt als Komponente c) sind $\epsilon$-Caprolactondiole, die auf Hexandiol-1,6 gestartet sind und die eine sehr enge Oligomerenverteilung aufweisen, was durch Verwendung von Bortrifluorid-Etherat oder organischen Zinnverbindungen als Katsalysator bei der Polymerisierung erreicht werden kann. Diese ganz besonders bevorzugten Esterdiole bestehen zu mehr als 50 Gew.-% aus Molekülen in einem Molekulargewichtsbereich von 460 bis 802.

Die Reihenfolge der Umsetzung der Ausgangsverbindungen a), b) und c) kann beliebig gewählt werden, jedoch mit der Einschränkung, daß die Umsetzung mit der Komponente c) (Urethanbildung) vor der Entfernung des überschüssigen Ausgangsdiisocyanats a) erfolgen muß. Dies bedeutet, daß die Urethanisierungsreaktion in einem getrennten Schritt vor oder nach der Biuretisierung und/oder gleichzeitig mit der Biuretisierung durchgeführt wird, indem man die Komponente c) vorab mit der Komponente a) unter Urethanisierung eines Teils der Isocyanatgruppen der Komponente a) zur Reaktion bringt oder nach erfolgter Umsetzung mit dem Biuretisierungsmittel mit dem Gemisch aus überschüssigem Ausgangsdiisocyanat a) und Biuretpolyisocyanat unter teilweiser Urethanisierung der in dem als Lösung vorliegenden Gemisch vorliegenden Isocyanatgruppen zur Reaktion bringt, oder indem man die Ausgangsdiisocyanate a) mit einem Gemisch aus Biuretisierungsmittel b) und Polyesterdiol c) zur Reaktion bringt. Selbstverständlich ist es auch möglich, die Komponente c) in mehrere Teile aufzuteilen und jeden Teil für sich vor und/oder während und/oder nach der Biuretisierungsreaktion zwecks Urethanisierung eines Teils der vorliegenden Isocyanatgruppen einzusetzen.

Bezüglich der Wahl der Mengenverhältnisse der einzelnen Reaktionspartner ist vorzugsweise dafür Sorge zu tragen, daß

- das 1,6-Diisocyanatohexan a) stets in einem solchen Überschuß eingesetzt wird, daß nach erfolgter Umsetzung in dem Reaktionsgemisch noch mindestens 10 Gew.-%, vorzugsweise 35 bis 70 Gew.-%, bezogen auf Gesamtgemisch ohne Einbeziehung von gegebenenfalls mitverwendeten inerten Lösungsmitteln, an freiem 1,6-Diisocyanatohexan vorliegen,

- die Menge des Biuretisierungsmittels b) so niedrig gehalten wird, daß höchstens 50 Mol-%, vorzugsweise 30 bis 10 Mol-% der Isocyanatgruppen des 1,6-Diisocyanatohexans a) unter Biuretbildung abreagieren, wobei bei der diesbezüglichen Berechnung davon auszugehen ist, daß bei der Biuretisierungsreaktion ausschließlich N,N′,N″-trisubstituierte Biurete entstehen, und daß

- das Molverhältnis von Biuretgruppen zu Urethangruppen in den Verfahrensprodukten bei 20:1 bis 0,2:1, vorzugsweise 5:1 bis 0,5:1 liegt.

Im allgemeinen werden, bezogen auf das eingesetzte 1,6-Diisocyanatohexan a) 1 bis 50, vorzugsweise 10 bis 40 Gew.-% des Polyesterdiols c) verwendet. Im Falle der obengenannten besonders bevorzugten Biuretisierungsmittel b) liegt das Molverhältnis von Isocyanatgruppen zu (potentiellem) Wasser vorzugsweise bei 40:1 bis 6:1, wobei 2 Mol trisubstituierte Essigsäure ( = "potentielles Wasser") einem Mol Wasser entsprechen.

Das erfindungsgemäße Verfahren wird im allgemeinen innerhalb des Temperaturbereichs von 20 bis 180°C durchgeführt, wobei die Urethanisierung vorzugsweise innerhalb des Temperaturbereichs von 20 bis 150°C, insbesondere 80 bis 130°C und die Biuretisierung vorzugsweise innerhalb des Temperaturbereichs von 80 bis 180°C, insbesondere 80 bis 130°C erfolgt.

Die Durchführung des erfindungsgemäßen Verfahrens kann nach mehreren Varianten erfolgen. Vorzugsweise wird jedoch so gefahren, daß man die Ausgangskomponente a), d.h. das 1,6-Diisocyanatohexan vorlegt und die Komponenten b) und c) in der oben angegebenen (beliebigen) Reihenfolge bei der jeweiligen Reaktionstemperatur unter inniger Durchmischung in das vorgelegte Diisocyanat allmählich einträgt. Es ist jedoch auch prinzipiell möglich in Analogie zu der Verfahrensweise der EP-A-3505, beispielsweise unter Verwendung von 1,6-Diaminohexan als Biuretisierungsmittel b), zu verfahren, indem man beispielsweise die gegebenenfalls durch die Umsetzung mit der Komponente c) bereits urethanisierte Diisocyanatkomponente a) in dem in dieser Literaturstelle beschriebenen Mischraum vorlegt und die im Unterschuß zum Einsatz gelangende Diaminkomponente mittels der in der Literaturstelle beschriebenen Glattstrahldüse unter Einhaltung der in der genannten Vorveröffentlichung genannten Bedingungen bezüglich des Drucks und der Relativgeschwindigkeit in das vorgelegte Diisocyanat einträgt. Auch hier ist natürlich eine gleichzeitig mit oder im Anschluß an die Biuretisierung erfolgende Urethanisierung möglich.

Die Biuretbildung kann auch in an sich bekannter Weise zweistufig (zweistufige Temperaturführung) über eine Harnstoff-Zwischenstufe vorgenommen werden, wie dies beispielsweise in EP-A-3505, DE-PS 1 165 580, DE-PS 1 174 759, DE-OS 1 568 017, DE-OS 1 963 190, DE-OS 2 010 887, DE-OS 2 261 065, DE-AS 2 438 258, US-P 3 824 266, DE-AS 2 609 995, DE-OS 2 803 103, DE-PS 883 504, GB-PS 1 263 609 oder Angew. Chem. 72, S. 1002 beschrieben ist.

Das erfindungsgemäße Verfahren kann zweckmäßig in Anwesenheit von inerten Lösungsmitteln wie beispielsweise Ether, wie Diisopropylether, Ethylenglykoldimethylether, Diethylenglykoldimethylether, 1,4-Dioxan, Tetrahydrofuran, 1,2-Dimethoxypropan; Ester, wie Butyrolacton, Ethylenglykolcarbonat, Propylenglykolcarbonat; Ether-Ester, wie Methoxyethylacetat, Ethoxyethylacetat, 1-Methoxypropyl-2-acetate, 2-Methoxypropyl-1-acetat, 1-Ethoxypropyl-2-acetat, 2-Ethoxypropyl-1-acetat; Ketone, wie Aceton, Methylethylketon; Nitrile, wie Acetonitril, Propionitril, Methoxypropionitril; Sulfone, wie Sulfolan, Dimethylsulfon, Diethylsulfon; Phosphorsäureester, wie Trimethylphosphat, Triethylphosphat, durchgeführt werden, obwohl auch ohne Mitverwendung derartiger Lösungsmittel gearbeitet werden kann.

Nach beendeter Urethanisierung und Biuretisierung werden das überschüssige Diisocyanat sowie die gegebenenfalls entstandenen Nebenprodukte und verwendeten Lösemittel durch eine geeignete Maßnahme bis auf einen Restgehalt an Ausgangsdiisocyanat von maximal 0,5 Gew.-% abgetrennt. Man kann dies durch eine Dünnschichtdestillation oder Extraktion, beispielsweise mittels n-Hexan als Extraktionsmittel, erreichen.

Die erfindungsgemäßen Urethan- und Biuretgruppen enthaltenden Verfahrensprodukte sind flüssige, praktisch farblose Polyisocyanate mit einem NCO-Gehalt von etwa 8 bis etwa 20%. Sie sind in üblichen Lösemitteln wie Estern, Ketonen und Kohlenwasserstoffen löslich, lassen sich damit ohne Eintrübung verdünnen und zeichnen sich durch gute Lagerstabilität aus. Sie sind weitgehend frei von Nebenprodukten. Sie eignen sich in hervorragender Weise als Härter für Zweikomponenten-Polyurethanlacke, in denen als Polyhydroxylverbindungen die üblichen Polyetherpolyole, Polyesterpolyole und/oder Polyacrylatpolyole als Reaktionspartner für die Polyisocyanate vorliegen. Besonders bevorzugte Reaktionspartner für die erfindungsgemäßen Verfahrensprodukte sind Hydroxylgruppen aufweisende Polyacrylate, d.h. Polymerisate bzw. Copolymerisate von (Meth)acrylsäure-alkylestern, gegebenenfalls mit Styrol oder anderen copolymerisierbaren olefinisch ungesättigten Monomeren.

Den Zweikomponenten-Polyurethanlacken, die als Bindemittel Kombinationen derartiger Polyhydroxylverbindungen mit den erfindungsgemäßen Verfahrensprodukten als Härter enthalten, können selbstverständlich die aus der Lacktechnologie üblichen Hilfs- und Zusatzmittel wie Pigmente, Verlaufhilfsmittel, Katalysatoren, Lösungsmittel u.dgl. einverleibt werden. Die Zweikomponenten-Polyurethanlacke, die die erfindungsgemäßen Verfahrensprodukte als Härter enthalten, härten bei Raumtemperatur oder wenig erhöhter Temperatur zu chemikalienbeständigen Lackfilmen aus.

Selbstverständlich ist es auch möglich, die erfindungsgemäßen Verfahrensprodukte in mit Blockierungsmitteln blockierter Form als Härter in Hitze-vernetzbaren Einkomponentenlacken zu verwenden. Als Blockierungsmittel eignen sich die hierfür üblichen Verbindungen wie beispielsweise Phenol, Kresole, Trimethylphenole, tert.-Butylphenole; tertiäre Alkohole wie tert.-Butanol, tert.-Amylalkohol, Dimethylphenylcarbinol; leicht Enole bildende Verbindungen wie Acetessigester, Acetylaceton, Malonsäurederivate wie Malonsäurediester mit 1 bis 8 C-Atomen in den Alkoholresten; sekundäre aromatische Amine wie N-Methylanilin, die N-Methyltoluidine, N-Phenyltoluidin, N-Phenylxylidin; Imide wie Succinimid; Lactame wie ε-Caprolactam, δ-Valerolactam; Oxime wie Butanonoxim, Cyclohexanonoxim; Mercaptane wie Methylmercaptan, Ethylmercaptan, Butylmercaptan, 2-Mercaptobenzthiazol, α-Naphthylmercaptan, Dodecylmercaptan oder Triazole wie 1H-1,2,4-Triazol.

Die erfindungsgemäßen Verfahrensprodukte können auch mit Polyaminen kombiniert werden, deren Aminogruppen blockiert sind wie z.B. mit Polyketiminen, Polyaldiminen oder Oxazolanen. Unter dem Einfluß von Feuchtigkeit entstehen freie Aminogruppen und (im Falle der Oxazolane) freie OH-Gruppen, die unter Vernetzung mit den NCO-Gruppen abreagieren.

In allen genannten Lackkombinationen liegen die Polyisocyanatkomponente und der Reaktionspartner in solchen Mengen vor, daß auf jede (gegebenenfalls blockierte) NCO-Gruppe 0,8 bis 3, vorzugsweise 0,9 bis 1,8 (gegebenenfalls blockierte) gegenüber Isocyanaten reaktionsfähige Gruppen entfallen.

Die die erfindungsgemäßen Verfahrensprodukte, gegebenenfalls in blockierter Form, als Härter enthaltenden Beschichtungsmittel eignen sich zur Beschichtung beliebiger Substrate. Sie zeichnen sich gegenüber analogen Beschichtungsmitteln, die als Härter die üblichen Biuretpolyisocyanate enthalten, durch eine erhöhte Flexibilität der Beschichtungen aus. Das besonders bevorzugte Anwendungsgebiet für die erfindungsgemäßen Verfahrensprodukte besteht in ihrer Verwendung als Härter für Zweikomponenten-Kunststofflacke auf Basis der oben beispielhaft genannten Polyhydroxylverbindungen, insbesondere bei der Lackierung von flexiblen Kunststoffteilen.

In den nachfolgenden Beispielen beziehen sich alle Prozentangaben auf Gewichtsprozente.

Beispiele

Beispiel 1 (Herstellung eines Diols)

Aus 2920 Gewichtsteilen Adipinsäure, 2910 Gewichtsteilen Neopentylglykol und 470 Gewichtsteilen Hexandiol-1,6 wird bei 120 - 140°C eine Schmelze hergestellt. Dann wird die Temperatur langsam innerhalb von ca. 12 Stunden auf 180°C erhöht, wobei Wasser abdestilliert. Danach hält man die Schmelze ca. 2 Stunden auf 200°C. Nun fügt man 0,03 Gewichtsteile $SnCl_2.2\,H_2O$ als Katalysator zu, legt Vakuum an und erhitzt ca. 15 Stunden auf 180 bis 200°C.

Man erhält einen flüssigen, hellgelb gefärbten Polyester mit folgenden Daten:
OH-Zahl: 225 (ber. 241)
SZ: 1
Mittleres Molgewicht (aus Hydroxylzahl ber.): 498

Beispiel 2 (Herstellung eines Diols)

In einem mit Stickstoff gespülten 100 l-Kessel werden 57,3 kg ε-Caprolacton, 12,7 kg Hexandiol-1,6 und 3,5 g Zinn-II-octoat miteinander vermischt und auf 160°C erhitzt. Nach 4 Stunden bei 160°C ist die Reaktion beendet. Nach Abkühlen wird der Ansatz (70 kg) abgelassen, das Produkt ist bei Raumtemperatur flüssig.

Daten des Diols:

$\eta_{25°C}$: 330 mPas
OHZ: 172,4
SZ: 0,6
Farbzahl (HAZEN) nach DIN 53 409: 30
Mittleres Molgewicht (aus OH-Zahl ber.): 650
Eine Analyse mittels Gelchromatographie ergibt folgende Oligomerenverteilung des Polyesters:

| Oligomer Molgewicht | experimentell (Flächen-% = Gewichts-%) |
|---|---|
| 118 | 0,15 |
| 232 | 1,75 |
| 346 | 5,76 |
| 460 | 11,44 |
| 574 | 15,92 |
| 688 | 19,19 |
| 802 | 15,62 |
| 916 | 12,08 |
| 1030 | 8,15 |
| 1144 | 5,25 |
| >1144 | 4,69 |

Ergebnis: Mehr als 50 Gew.-% der im Polyester enthaltenen Moleküle liegen in einem Molgewichtsbereich von 460 bis 802.

Beispiel 3 (Herstellung eines Polyisocyanats - erfindungsgemäß)

2100 g 1,6-Diisocyanatohexan (HDI) werden mit 250 g des Polyesters aus Beispiel 1 vermischt, auf 80 bis 100°C aufgeheizt und so lange bei dieser Temperatur gehalten, bis der theoretische NCO-Wert von 42,9 % erreicht bzw. leicht unterschritten ist (nach 2 bis 3 h). Dann werden 100 g Triethylphosphat und 33,8 g Pivalinsäureanhydrid zugegeben und auf 110°C erhitzt. Bei dieser Temperatur werden innerhalb einer Stunde 4,1 g Pivalinsäure und 17,3 g Wasser gleichzeitig aus getrennten Behältern zugetropft. Ohne daß sich ein Niederschlag bildet, setzt eine heftige $CO_2$-Entwicklung ein. Nach Beendigung des Zutropfens wird noch 2 h bei 120°C gerührt. Der berechnete NCO-Wert von 35,8 % sollte dann um 0,5 - 1 % unterschritten sein. Das entstehende klare Produkt wird über einen Kurzweg-Verdampfer von Monomeren und Lösungsmittel befreit. Man erhält 1035 g eines farblosen, flüssigen Harzes.

Daten des erhaltenen Polyisocyanats:

NCO-Gehalt: 16,8 %
Viskosität: 4500 mPas
Farbzahl (HAZEN) nach DIN 53 409: 20


Beispiel 4 (Herstellung eines Polyisocyanats - erfindungsgemäß)

Man verfährt wie in Beispiel 3 und stellt ein Isocyanat aus folgenden Ansatzmengen her:
2184 g 1,6-Diisocyanatohexan
660 g Diol aus Beispiel 2
100 g Triethylphosphat
33,8 g Pivalinsäureanhydrid
4,1 g Pivalinsäure
17,3 g Wasser
Man erhält 1429 g eines farblosen niedrigviskosen Polyisocyanats mit folgenden Daten:
NCO-Gehalt: 12,7 %
Viskosität: 3000 mPas
Farbzahl (HAZEN) nach DIN 53 409: 15
Gehalt an freiem HDI: 0,08 %


Beispiel 5 (Herstellung eines Polyisocyanats - erfindungsgemäß)

Man verfährt wie in Beispiel 4 und benutzt die gleichen Bestandteile und die gleichen Mengenverhältnisse. Das Polyesterdiol aus Beispiel 2 wird aber erst während der Biuretisierungsreaktion zusammen mit der Pivalinsäure in das Reaktionsgemisch eingetragen. Man erhält nach Entfernen von überschüssigem Diisocyanat und Lösemittel ein Produkt mit folgenden Daten:
NCO: 12,5 %
Viskosität: 2900 mPas
Farbzahl (HAZEN) nach DIN 53 409: 15
Gehalt an freiem HDI: 0,05 %


Beispiel 6 (Herstellung eines Polyisocyanats - erfindungsgemäß)

Aus den gleichen Bestandteilen in den gleichen Mengenverhältnissen wie in Beispiel 4 wird ein Polyisocyanat hergestellt. Im Unterschied zu Beispiel 4 wird das Diol erst nach erfolgter Biuretisierung zugegeben und bei 80 - 100°C bis zu einem NCO-Gehalt von 30,4 % urethanisiert. Erst danach wird überschüssiges Diisocyanat und Lösungsmittel durch Destillation entfernt.

Daten des erhaltenen Polyisocyanats:

NCO: 12,3 %
Viskosität: 3100 mPas
Farbzahl (HAZEN) nach DIN 53 409: 20
Gehalt an freiem HDI: 0,05 %
Die nach Beispiel 4, 5 und 6 erhaltenen Produkte sind praktisch identisch und verhalten sich auch in ihren anwendungstechnischen Eigenschaften identisch. Sie bleiben ebenso wie das Polyisocyanat aus Beispiel 3 beim längeren Stehen bei Umgebungstemperatur und auch beispielsweise bei 0°C klar ohne jede Phasentrennung und Eintrübung.

Beispiel 7 (Vergleichsversuch zu Beispiel 3 - nicht erfindungsgemäß)

Dieses Beispiel zeigt, daß eine nachträgliche Modifizierung eines Biuretpolyisocyanats mit einem Diol nicht zu technisch brauchbaren Produkten führt.
Man verfährt wie in Beispiel 3 angegeben, und stellt aus gleichen Mengen HDI, Wasser, Pivalinsäureanhydrid und Pivalinsäure in Triethylphosphat als Lösungsmittel ein Biuretpolyisocyanat her, das durch eine Dünnschichtdestillation von freiem Diisocyanat getrennt wird. Man erhält 430 g eines flüssigen Biuretpolyisocyanats (7a) mit einem NCO-Gehalt von 24 %. Nun gibt man 250 g des Polyesters aus Beispiel 1 zu und rührt bei 80°C. Nach 15 min geliert die Mischung.

In einem weiteren Versuch werden 250 g des Polyesters mit 504 g HDI bei 80°C umgesetzt bis der berechnete NCO-Gehalt von 27,8 g erreicht oder leicht unterschritten ist. Dann wird überschüssiges HDI durch Destillation entfernt. Man erhält 297 g eines in der Wärme klaren, flüssigen Harzes mit einem NCO-Gehalt von 9,8 %, das beim Stehen und Abkühlen trübe wird.

Dieses Urethanharz (7b) mischt man nun mit dem reinen Biuretharz (7a) im Gewichtsverhältnis 430:397 ab.

Man erhält ein Biuret- und Urethangruppen enthaltendes Polyisocyanat (7c) mit 17,2 % NCO, das in der Wärme und nach dem Mischen klar und durchsichtig ist. Beim mehrtägigen Stehen bei ca. 23°C scheidet sich eine Trübung ab, die eine Verarbeitung zu hochglänzenden Lacken mit guten mechanischen Eigenschaften unmöglich macht. Die erfindungsgemäßen Polyisocyanate der Beispiele 3 bis 6 bleiben, unter gleichen Bedingungen gelagert, völlig klar.

Beispiel 8 (Verwendungsbeispiel)

Die beiden erfindungsgemäßen Diisocyanate aus Beispiel 3 und Beispiel 4 werden in Kombination mit einem Hydroxylpolyacrylat im Vergleich mit einem Polyisocyanat vom Stand der Technik als Lackbindemittel zur Lackierung eines elastischen Kunststoffs eingesetzt.

Als Hydroxypolyacrylat wird die 65 %ige Lösung in Xylol eines Copolymerisats aus 18 Gew.-% Styrol, 26 Gew.-% Hydroxyethylacetat, 55 Gew.-% Butylacrylat und 1 % Acrylsäure eingesetzt. Die Lösung hat eine Hydroxylzahl von 72, eine Säurezahl von 5,9 und eine Viskosität von 2300 mPas/23°C.

Als Vergleichsisocyanat wird ein handelsübliches Biuretgruppen enthaltendes Polyisocyanat auf der Basis von HDI eingesetzt, das als 75 %ige Lösung in Xylol/Methoxypropylacetat vorliegt. Die Lösung hat einen NCO-Gehalt von 16,5 Gew.-%.

Die Kombinationen werden zur Lackierung von Platten aus einem halbharten, elastischen PUR-Integralschaumkunststoff eingesetzt. Die Platten sind mit einer Grundierung vorbehandelt.

Die Kombinationen aus Polyisocyanat und Hydroxylkomponente werden im NCO/OH-Verhältnis von 1:1 hergestellt. In der üblichen Weise wird vorher in die Hydroxylkomponente ein $TiO_2$-Pigment (vom Rutil-Typ) über einen Dreiwalzenmischer eingearbeitet. Das Gewichtsverhältnis von organischem Bindemittel zu Pigment beträgt 1,5 im spritzfertigen Lack. Als Katalysator fügt man 0,3 Gew.-% (bez. auf Bindemittel) Diazabicyclooctan zu.

Die Gemische werden mit weiteren Lösemitteln auf eine Auslaufzeit (DIN 53 211, 4 mm) von ca. 18 Sekunden eingestellt. Die Verarbeitungszeit dieser spritzfertigen Lacke im geschlossenen Gefäß beträgt ca. 30 Stunden. Sie werden auf die Kunststoffplatten aufgespritzt und die Eigenschaften untersucht. Die Ergebnisse sind in der Tabelle zusammengefaßt. Die Haftung, der Glanz und die Schlagelastizität der Lackfilme sind nicht angegeben. Sie liegen in allen Fällen auf einem sehr hohen Niveau.

| Prüfung | Lack mit Vergleichs- polyisocyanat | Lack mit Poly- isocyanat aus Beispiel 3 | Lack mit Poly- isocyanat aus Beispiel 4 |
|---|---|---|---|
| **Pendelhärte (s) nach** | | | |
| 45 min/80°C | 29 | 22 | 27 |
| 7 Tagen/ca. 23°C | 109 | 101 | 30 |
| 14 Tagen/ca. 23°C | 115 | 105 | 63 |
| 14 Tagen/ca. 23°C + 30 min 80°C | 115 | 108 | 70 |
| **Anlösbarkeit nach Lagerung des Lack- films 45 min bei 80°C und 14 Tagen bei ca. 23°C (1)** | | | |
| Toluol | 2 | 2 | 1-2 |
| Methoxypropylacetat | 1-2 | 1-2 | 1 |
| Ethylacetat | 2-3 | 2-3 | 3 |
| Aceton | 3 | 2-3 | 2-3 |
| **Knicktest bei verschiedenen Tempera- turen/1 Inch (= 2,54 cm) (2)** | | | |
| +20°C | + | + | + |
| + 5°C | + | + | + |
| 0°C | 0 | + | + |
| - 5°C | - | + | + |
| -10°C | - | + | + |
| -15°C | - | + | + |
| -20°C | - | + | + |
| -40°C | - | - | + |

+ = in Ordnung, 0 = beginnende Rißbildung, - = gerissen

EP 0 320 703 B1

Erläuterungen zur Tabelle:

(1) Die Anlösbarkeit der Lackfilme wird beurteilt nach 1 min Einwirkung der Lösemittel. Die Schädigung des Lackfilms wird in 6 Stufen beurteilt, von

O = Lackfilm ist völlig unverändert

bis

5 = Lackfilm löst sich auf.

(2) Der Knicktest erfolgt mit den PUR-Kunststoffplatten. Nach Aufspritzen der Lacke auf die mit einer Grundierung versehenen, leicht angeschliffenen Platten wird kurz abgelüftet und 45 Minuten bei $80^{\circ}$ C eingebrannt und danach 1 Woche bei ca. $23^{\circ}$ C gealtert. Man schneidet nun 2 cm breite Streifen, die bei den jeweiligen Meßtemperaturen ca. 30 Minuten gelagert werden. Anschließend biegt man diese Streifen um einen 1 Inch-Dorn, der ebenfalls auf die jeweilige Meßtemperatur gebracht wurde. Auch die Prüfung erfolgt bei der jeweiligen Meßtemperatur (in der Kältekammer).

Beurteilung der Proben:

+: Film in Ordnung

O: beginnende Rißbildung

-: gerissen

Zusammenfassung der Ergebnisse:

Die erfindungsgemäßen Lackpolyisocyanate zeichnen sich gegenüber dem Stand der Technik dadurch aus, daß sie zu Lackfilmen mit größerer Elastizität, vor allem mit höherer Biegeelastizität, bei tiefer Temperatur führen.

**Patentansprüche**

1. Verfahren zur Herstellung von Urethan-modifizierten Biuretpolyisocyanaten durch Umsetzung von
   a) 1,6-Diisocyanatohexan
mit unterschüssigen Mengen an
   b) Biuretisierungsmitteln, bestehend aus Wasser und/oder organischen, mit Isocyanatgruppen unter Biuretbildung reagierenden Verbindungen,
unter Biuretbildung und anschließende Entfernung des nicht umgesetzten, überschüssigen 1,6-Diisocyanatohexans und von gegebenenfalls vorliegenden weiteren flüchtigen Bestandteilen, dadurch gekennzeichnet, daß man dem Reaktionsgemisch zu einem beliebigen Zeitpunkt vor der Entfernung des überschüssigen 1,6-Diisocyanatohexans

c) mindestens ein Estergruppen aufweisendes Diol mit einem mittleren Molekulargewicht von 350 bis 950 in einer Menge von 1 bis 50 Gew.-%, bezogen auf das Gewicht des als Ausgangsmaterial eingesetzten 1,6-Diisocyanatohexans, hinzufügt und mit einem Teil der vorliegenden Isocyanatgruppen unter Urethanbildung abreagieren läßt,

mit der Maßgabe, daß im Falle der Verwendung von (cyclo)aliphatischen Diaminen als Biuretisierungsmittel und der Anwendung von oberhalb 250°C liegenden Temperaturen während der Biuretisierungsreaktion das Molekulargewicht der Polyesterdiole oberhalb 500 liegt, und wobei bei allen Varianten des Verfahrens die Art und Mengenverhältnisse der Reaktionspartner so gewählt werden, daß (i) in dem Reaktionsgemisch ohne Einbeziehung von gegebenenfalls mitverwendetem inertem Lösungsmittel nach beendeter Umsetzung noch mindestens 10 Gew.-% an freiem 1,6-Diisocyanatohexan vorliegen und (ii) das Molverhältnis von Biuretgruppen zu Urethangruppen in den Verfahrensprodukten bei 20:1 bis 0,2:1 liegt.

2. Verfahren gemäß Anspruch 1, dadurch gekennzeichnet, daß man als Biuretisierungsmittel b)
    b1) Trimethylessigsäure,
    b2) Gemische aus Trimethylessigsäure und Wasser im Molverhältnis von bis zu 1:2,5 oder
    b3) Gemische aus Wasser mit (i) Trimethylessigsäure und/oder Trimethylessigsäure-anhydrid, in denen pro Mol Wasser 0 bis 0,39 Mol der Komponente (i) und/oder 0 bis 2 Mol der Komponente (ii) vorliegen, mit der Maßgabe, daß die Gesamtmenge der Komponenten (i) und (ii) pro Mol Wasser mindestens 0,02 und höchstens 2 Mol beträgt,
    verwendet.

3. Verfahren gemäß Anspruch 1 und 2, dadurch gekennzeichnet, daß man als Estergruppen aufweisendes Diol c) einen Polyester der Adipinsäure verwendet.

4. Verfahren nach Anspruch 1 und 2 dadurch gekennzeichnet, daß man als Polyesterdiol c) ein Polyesterdiol verwendet, welches durch Umsetzung von $\epsilon$-Caprolacton mit 1,6-Dihydroxyhexan hergestellt worden ist, und dessen Moleküle zu mehr als 50 Gew.-% ein Molekulargewicht von 460 bis 802 aufweisen.

5. Gemäß Anspruch 1 bis 3 erhaltene, Urethan-modifizierte Biuretpolyisocyanate.

6. Verwendung der gemäß Anspruch 1 bis 4 erhaltenen, Urethan-modifizierten Biuretpolyisocyanate als Polyisocyanatkomponente in Zweikomponenten-Polyurethanlacken.

**Claims**

1. A process for the production of urethane-modified biuret polyisocyanates by reaction of
    a) 1,6-diisocyanatohexane
    with less than equivalent quantities of
    b) biuretizing agents consisting of water and/or organic compounds reacting with isocyanate groups to form biuret groups
    with biuretization and subsequent removal of the unreacted excess 1,6-diisocyanatohexane and any other volatile constituents present, characterized in that
    c) at least one ester-functional diol having an average molecular weight of 350 to 950 is added to the reaction mixture in a quantity of 1 to 50% by weight, based on the weight of the 1,6-diisocyanatohexane used as starting material, at any time before removal of the excess 1,6-diisocyanatohexane and allowed to react with part of the isocyanate groups present to form urethane groups,
    with the proviso that, where (cyclo)aliphatic diamines are used as biuretizing agents and temperatures above 250°C are applied during the biuretization reaction, the molecular weight of the polyester diols is above 500, the nature of and quantitative ratios between the reactants in all variants of the process being selected so that (i) the reaction mixture still contains at least 10% by weight free 1,6-diisocyanatohexane, including any inert solvent used, on completion of the reaction and (ii) the molar ratio of biuret groups to urethane groups in the end products is 20:1 to 0.2:1.

2. A process as claimed in claim 1, characterized in that the biuretizing agent b) is selected from
    b1) trimethylacetic acid,

EP 0 320 703 B1

b2) mixtures of trimethylacetic acid and water in a molar ratio of up to 1:2.5 or

b3) mixtures of water with (i) trimethylacetic acid and/or trimethyl acetic anhydride in which 0 to 0.39 mol component (i) and/or 0 to 2 mol component (ii) is/are present per mol water, with the proviso that the total quantity of components (i) and (ii) per mol water is at least 0.02 and at most 2 mol.

3. A process as claimed in claims 1 and 2, characterized in that a polyester of adipic acid is used as the ester-functional diol c).

4. A process as claimed in claims 1 and 2, characterized in that a polyester diol which has been obtained by reaction of $\epsilon$-caprolactone with 1,6-dihydroxyhexane and of which more than 50% by weight of the molecules have a molecular weight of 460 to 802 is used as the polyester diol c).

5. Urethane-modified biuret polyisocyanates obtained by the process claimed in claims 1 to 3.

6. The use of the urethane-modified biuret polyisocyanates obtained by the process claimed in claims 1 to 4 as polyisocyanate component in two-component polyurethane lacquers.

**Revendications**

1. Procédé de production de polyisocyanates de biuret modifiés par l'uréthane par la réaction de
    a) le 1,6-diisocyanatohexane
avec une quantité inférieure à la proportion stoechiométrique
    b) d'agents de biurétisation constitués d'eau et/ou de composés organiques réagissant avec les groupes isocyanates en formant du biuret,
avec formation de biuret et élimination ultérieure du 1,6-diisocyanatohexane en excès qui n'a pas réagi et, éventuellement, d'autres constituants volatils, caractérisé en ce que l'on ajoute au mélange réactionnel, à un moment quelconque avant l'élimination du 1,6-diisocyanatohexane en excès,
    c) au moins un diol présentant des groupes esters et ayant un poids moléculaire moyen allant de 350 à 950, en quantités allant de 1 à 50% en poids rapportées au poids du 1,6-diisocyanatohexane utilisé comme matière première et qu'on fait réagir ce diol avec une partie des groupes isocyanate présents avec formation d'uréthane,
avec pour condition que, en cas d'utilisation de diamines (cyclo)aliphatiques comme agents de biurétisation et de l'application de températures supérieures à 250°C pendant la réaction de biurétisation, le poids moléculaire des diols de polyesters est supérieur à 500 tandis que, dans toutes les variantes du procédé, la nature et les rapports pondéraux des réactifs sont choisis de façon que (i) il existe dans le mélange réactionnel et sans tenir compte d'un solvant inerte utilisé éventuellement, encore au moins 10% en poids de 1,6-diisocyanatohexane libre lorsque la réaction est terminée, et (ii) que le rapport molaire des groupes de biurets aux groupes d'uréthane dans les produits du procédé soit compris entre 20:1 et 0,2:1.

2. Procédé selon la revendication 1, caractérisé en ce que l'on utilise comme agent de biurétisation b)
    b1) de l'acide triméthylacétique,
    b2) des mélanges d'acide triméthylacétique et d'eau avec un rapport molaire égal au maximum à 1:2,5 ou
    b3) des mélanges d'eau avec (i) de l'acide triméthylacétique et/ou (ii) de l'anhydride triméthylacétique dans lesquels il existe, pour chaque mole d'eau, de 0 à 0,39 mole du composant (i) et/ou de 0 à 2 moles du composant (ii), avec pour condition que la quantité totale des composants (i) et (ii) est égale à au moins 0,02 et au maximum à 2 moles pour chaque mole d'eau.

3. Procédé selon les revendications 1 et 2, caractérisé en ce que l'on utilise un polyester de l'acide adipique comme diol c) présentant des groupes ester .

4. Procédé selon les revendications 1 et 2, caractérisé en ce que l'on utilise comme diol de polyester c) un diol de polyester qui a été préparé en faisant réagir de l'$\epsilon$-caprolactone avec du 1,6-dihydroxyhexane et dont les molécules présentent, pour plus de 50% en poids, un poids moléculaire de 460 à 802.

5. Polyisocyanate de biuret modifié par l'uréthane et obtenu selon les revendications 1 à 3.

12

6. Utilisation des polyisocyanates de biuret modifiés par l'uréthane obtenus selon les revendications 1 à 4 comme composants de polyisocyanates dans les peintures de polyuréthane à deux composants.